# EUROPÄISCHE PATENTANMELDUNG

(11) **EP 4 310 360 A1**
(43) Veröffentlichungstag der Anmeldung: **24.01.2024**
(21) Anmeldenummer: 23176965.4
(22) Anmeldetag: 02.06.2023
(51) Int. Cl.: F16F 7/10

(54) **SCHWINGUNGSKOMPENSATORVORRICHTUNG**

(30) Priorität: 18.07.2022 FR 2207321
(71) Anmelder: Robert Bosch GmbH, 70442 Stuttgart (DE)
(72) Erfinder: Herve, Fabien, 12032 Rodez (FR); El hajby, Brahim, 12032 Rodez (FR)

(57) **Zusammenfassung**

Die Erfindung geht aus von einer Schwingungskompensatorvorrichtung zur aktiven Dämpfung von Schwingungen eines Schwingungssystems (12), insbesondere eines Schwingungssystems (12) eines Transportmittels oder eines Elektrowerkzeugs,
- mit einer Schwingungsdämpfereinheit (20), die zumindest einen Piezo-Aktor (22, 24, 26, 28) aufweist,
- mit einer Sensoreinheit (30), mit zumindest einen Beschleunigungs-sensor (32, 34, 36) aufweist der dem Piezo-Aktor zugeordnet ist,
- mit einer Steuer- und/oder Regeleinheit (40), die dazu vorgesehen ist, in Abhängigkeit von zumindest einem Signal (31) zumindest eines der Beschleunigungssensoren (32, 34, 36) entsprechend zugeordnete Piezo-Aktoren (22, 24, 26, 28) anzusteuern, und
- mit einer Schwungmasseneinheit (50), die zumindest eine Schwungmasse (52) aufweist, die dazu vorgesehen ist, von dem zumindest einen Piezo-Aktor (22, 24, 26, 28) in Bewegung versetzt zu werden.

Es wird vorgeschlagen, dass die Schwungmasse (52) mechanisch starr, insbesondere unmittelbar, mit dem Piezo-Aktor (22, 24, 26, 28) gekoppelt ist.

## Beschreibung

### Stand der Technik

Es sind bereits Schwingungskompensatorvorrichtungen vorgeschlagen worden, die Piezo-Elemente verwenden.

### Offenbarung der Erfindung

Die Erfindung geht aus von einer Schwingungskompensatorvorrichtung zur aktiven Dämpfung von Schwingungen eines Schwingungssystems, insbesondere eines Schwingungssystems eines Transportmittels oder eines Elektrowerkzeugs, mit einer Schwingungsdämpfereinheit, die zumindest einen Piezo-Aktor aufweist, mit einer Sensoreinheit, mit zumindest einem Beschleunigungssensor aufweist der dem Piezo-Aktor zugeordnet ist, mit einer Steuer- und/oder Regeleinheit, die dazu vorgesehen ist, in Abhängigkeit von zumindest einem Signal zumindest eines der Beschleunigungssensoren entsprechend zugeordnete Piezo-Aktoren anzusteuern, und mit einer Schwungmasseneinheit, die zumindest eine Schwungmasse aufweist, die dazu vorgesehen ist, von dem zumindest einen Piezo-Aktor in Bewegung versetzt zu werden.

Es wird vorgeschlagen, dass die Schwungmasse mechanisch starr, insbesondere unmittelbar, mit dem Piezo-Aktor gekoppelt ist. Eine derartige Ausgestaltung ermöglicht insbesondere eine Dämpfung von mittleren bis hohen Frequenzen.

Vorzugsweise ist der Piezo-Aktor als Piezostapel ausgebildet. Der Piezo-Aktor ist insbesondere dazu vorgesehen in Abhängigkeit von einem anliegenden Steuersignal, insbesondere einer anliegenden Steuerspannung, sich entlang einer Dämpfungsrichtung auszudehnen oder zu kontrahieren. Insbesondere ist die Schwungmasse mit einem Ende des Piezo-Aktors bezüglich der Dämpfungsrichtung verbunden. Insbesondere ist ein weiteres Ende des Piezo-Aktors bezüglich der Dämpfungsrichtung mit dem Schwingungssystem gekoppelt. Vorzugsweise ist der Piezo-Aktor mit dem Schwingungssystem starr und/oder unmittelbar verbunden. Insbesondere ist das Schwingungssystem eine Vibrationsquelle, deren Schwingungen gedämpft werden sollen. Beispielsweise ist der Piezo-Aktor mit einem Trägerelement gekoppelt, insbesondere starr verbunden, mit dem auch die Vibrationsquelle gekoppelt, insbesondere starr verbunden ist. Alternativ ist das Schwingungssystem frei von Vibrationserzeugern und die Schwingungskompensationsvorrichtung ist dazu vorgesehen, auf das Schwingungssystem übertragene Schwingungen zu dämpfen.

Insbesondere ist der Beschleunigungssensor als Piezoelement ausgebildet, das mit einer oder mehreren Referenzmassen, insbesondere federnd, gekoppelt ist, um in Abhängigkeit einer Auslenkung der Referenzmassen aus einer Ruhelage heraus bezüglich einer Messrichtung eine elektrische Spannung zu generieren. Alternativ kann der Beschleunigungssensor beispielsweise auch als optischer Sensor ausgebildet sein, der dazu vorgesehen ist, eine Position einer, insbesondere federnd aufgehängten, Referenzmasse zu bestimmen. Insbesondere kann der Beschleunigungssensor einen Schaltkreis aufweisen, die aus einer physikalischen Größe, insbesondere aus der Piezospannung des Piezoelements, das Signal für die Steuer- und/oder Regeleinheit generiert. Insbesondere kann der Schaltkreis in die Steuer- und/oder Regeleinheit integriert sein. Insbesondere ist der Beschleunigungssensor starr mit dem Piezo-Aktor gekoppelt. Alternativ ist es denkbar, dass der Beschleunigungssensor über ein Kopplungselement dynamisch mit dem Piezo-Aktor gekoppelt ist.

Unter einer "Steuer- und/oder Regeleinheit" soll insbesondere eine elektronische Einheit verstanden werden. Insbesondere ist die Steuer- und/oder Regeleinheit dazu vorgesehen, in Abhängigkeit von dem zumindest einen Signal des Beschleunigungssensors ein Steuersignal für den Piezo-Aktor zu generieren. Insbesondere ist das Steuersignal dazu vorgesehen, den Piezo-Aktor zu einer Schwingung anzuregen, die einer von dem Beschleunigungssensor erfassten Schwingung entgegengerichtet, also insbesondere in seiner Phase um 180 ° versetzt, ist. Insbesondere weist die Steuer- und/oder Regeleinheit zumindest einen Prozessor oder zumindest einen Integrierten Schaltkreis (ASIC) auf, um in Abhängigkeit von dem Signal, das Steuersignal zu generieren, insbesondere digital zu berechnen. Alternativ oder zusätzlich weist die Steuer- und/oder Regeleinheit zumindest einen Operationsverstärker und/oder zumindest einen Filter auf, um das Signal des Beschleunigungssensors zu verstärken und/oder zu filtern.

Darunter, dass ein bestimmter Beschleunigungssensor einem bestimmten Piezo-Aktor "zugeordnet" ist, soll insbesondere verstanden werden, dass die Steuer- und/oder Regeleinheit dazu vorgesehen ist, ein Steuersignal für den bestimmten Piezo-Aktor lediglich in Abhängigkeit von Signalen des bestimmten Beschleunigungssensors zu generieren und/oder dass ein Steuersignal, das in Abhängigkeit von Signalen des bestimmten Beschleunigungssensors generiert wird, lediglich dem bestimmten Piezo-Aktor zugeführt wird. Vorzugsweise sind die Dämpfungsrichtung des bestimmten Piezo-Aktors und die Messrichtung des bestimmten Beschleunigungssensors parallel.

Weiterhin wird vorgeschlagen, dass die Schwungmasse eine Masse zwischen 100 g und 500 g aufweist. So können insbesondere Schwingungen von Schwingungssystemen mit großen Massen gedämpft werden. Gemäß alternativen Ausgestaltungen wird vorgeschlagen, dass die Schwungmasse eine Masse zwischen 50 g und 100 g aufweist.

Unter einer "Schwungmasse", insbesondere auch seismische Masse genannt, soll insbesondere eine Masse verstanden werden, die lediglich mit einem oder mehreren Piezo-Aktoren starr verbunden ist.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die Steuer- und/oder Regeleinheit dazu vorgesehen ist, den zumindest einen Piezo-Aktor mit Frequenzen im Bereich zwischen 200 Hz und 1500 Hz zu betreiben. Hierdurch kann insbesondere eine Dämpfung von durch den Menschen als unangenehm empfunden Schwingungen erreicht werden.

Gemäß einer Weiterbildung wird vorgeschlagen, dass die Schwungmasse einen Hohlraum aufweist, in welchem der Piezo-Aktor angeordnet ist. Es kann insbesondere eine kompakte Ausgestaltung erreicht werden.

Weiterhin kann die Schwungmasse kegelstumpfartig ausgebildet sein. Es können insbesondere geringe akustische Abstrahlungen erreicht werden.

Weiter wird vorgeschlagen, dass die Schwingungsdämpfereinheit zumindest zwei, insbesondere zumindest fünf, beispielsweise zumindest acht, insbesondere eine Vielzahl, weitere Piezo-Aktoren aufweist, dass die Sensoreinheit zumindest zwei, insbesondere zumindest fünf, beispielsweise zumindest acht, insbesondere eine Vielzahl, weitere Beschleunigungssensoren aufweist und dass die weiteren Piezo-Aktoren 1-zu-1 den weiteren Beschleunigungssensoren zugeordnet sind. Hierdurch kann insbesondere eine gezielte Dämpfung lokaler Schwingungen erreicht werden.

Vorzugsweise weist die Schwungmasseneinheit für jeden der weiteren Piezo-Aktoren eine separate weitere Schwungmasse auf, die insbesondere direkt und/oder starr mit dem jeweiligen weiteren Piezo-Aktor verbunden ist.

Ferner können die Piezo-Aktoren, insbesondere der Piezo-Aktor und die zumindest zwei weiteren Piezo-Aktoren, und die Beschleunigungssensoren, insbesondere der Beschleunigungssensor und die zumindest zwei weiteren Beschleunigungssensoren, jeweils paarweise unterschiedlichen Raumrichtungen zugeordnet sein. So kann insbesondere eine gute Schwingungsdämpfung erreicht werden.

Weiterhin wird vorgeschlagen, dass jedem der Beschleunigungssensoren genau einer der Piezo-Aktoren zugeordnet ist und dass jedem der Piezo-Aktoren genau einer der Beschleunigungssensoren zugeordnet ist. Es kann insbesondere eine gezielte Dämpfung von Schwingungen direkt an ihrem Entstehungsort oder zumindest in dessen Nähe erreicht werden.

Alternativ wird vorgeschlagen, dass die Schwingungsdämpfereinheit zumindest einen zusätzlichen Piezo-Aktor aufweist, der gemeinsam mit dem Piezo-Aktor dem Beschleunigungssensor zugeordnet ist. Beispielsweise kann die Schwungmasseneinheit für den Piezo-Aktor und den zusätzlichen Piezo-Aktor eine gemeinsame Schwungmasse oder gleiche Schwungmassen aufweisen, beispielsweise um hohe Schwingungsamplituden zu dämpfen. Beispielsweise kann die Schwungmasseneinheit für den Piezo-Aktor und den zusätzlichen Piezo-Aktor unterschiedliche Schwungmassen aufweisen, insbesondere um unterschiedliche Frequenzen oder Frequenzbereiche zu dämpfen.

Weiterhin wird ein Transportmittel, insbesondere ein Elektrofahrzeug, vorgeschlagen, dass zumindest eine zuvor beschriebene Schwingungskompensatorvorrichtung aufweist. Insbesondere ist das Schwingungssystem als Karosserie des Transportmittels ausgebildet. Insbesondere ist Schwingungssystem als Motoraufhängung, insbesondere für einen Elektromotor ausgebildet. Insbesondere ist zumindest eine der Schwingungskompensationsvorrichtungen dazu vorgesehen, Schwingungen eines Motors, insbesondere eines Elektromotors, zu dämpfen. Weiterhin ist es denkbar, dass das Schwingungssystem ein Sitz, insbesondere ein Fahrzeug- oder Flugzeugsitz ist. Insbesondere ist zumindest eine der Schwingungskompensationsvorrichtungen dazu vorgesehen, Vibrationen, die von dem Transportmittel auf den Sitz übertragen werden, zu dämpfen. Das Transportmittel kann insbesondere eine Mehrzahl oder Vielzahl an voneinander unabhängigen Schwingungskompensatorvorrichtungen aufweisen, die jeweils eine eigene Steuer- und/oder Regeleinheit aufweisen. Insbesondere können die unterschiedlichen Schwingungskompensatorvorrichtungen an Sitzen, Motoren und/oder unterschiedlichen Stellen eines Fahrgestells angeordnet sein.

Ferner wird ein Handwerkzeug, insbesondere Elektrohandwerkzeug, mit zumindest einer zuvor beschriebenen Schwingungskompensatorvorrichtung vorgeschlagen. Insbesondere ist die Schwingungskompensatorvorrichtung dazu vorgesehen, Schwingungen zu dämpfen, die auf einen oder mehrere Handwerkzeuggriffe übertragen werden.

Die erfindungsgemäße Schwingungskompensatorvorrichtung, das erfindungsgemäße Handwerkzeug und/oder das erfindungsgemäße Transportmittel sollen hierbei nicht auf die oben beschriebene Anwendung und Ausführungsform beschränkt sein. Insbesondere können die erfindungsgemäße Schwingungskompensatorvorrichtung, das erfindungsgemäße Handwerkzeug und/oder das erfindungsgemäße Transportmittel zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind sechs Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Schwingungskompensatorvorrichtung in einer schematischen Ansicht,
- Fig. 2: einen schematischen Schaltkreis für die Schwingungskompensationsvorrichtung nach Fig 1,
- Fig. 3: eine erfindungsgemäße Schwingungskompensationsvorrichtung,
- Fig. 4: eine erfindungsgemäße Schwingungskompensationsvorrichtung,
- Fig. 5: ein erfindungsgemäßes Transportmittel in einer schematischen Ansicht,
- Fig. 6: ein erfindungsgemäßes Handwerkzeug in einer schematischen Ansicht und
- Fig. 7: ein Passagiersitz mit einer erfindungsgemäßen Schwingungskompensationsvorrichtung.

### Beschreibung der Ausführungsbeispiele

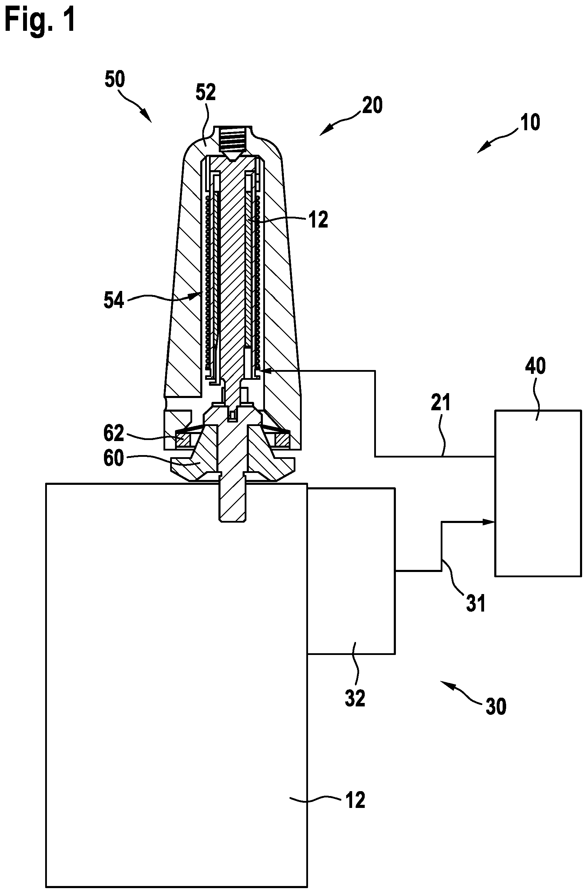

Figur 1 zeigt eine Schwingungskompensatorvorrichtung 10 zur aktiven Dämpfung von Schwingungen eines Schwingungssystems 12. Die Schwingungskompensatorvorrichtung 10 weist eine Schwingungsdämpfereinheit 20 auf, die zumindest einen, hier insbesondere genau einen, Piezo-Aktor 22 aufweist. Die Schwingungskompensatorvorrichtung 10 weist eine Sensoreinheit 30 auf, die zumindest einen, hier insbesondere genau einen, Beschleunigungssensor 32 aufweist, der dem Piezo-Aktor 22 zugeordnet ist. Die Schwingungskompensatorvorrichtung 10 weist eine Steuer- und/oder Regeleinheit 40 auf, die dazu vorgesehen ist, in Abhängigkeit von zumindest einem Signal 31 zumindest eines der Beschleunigungssensoren 32 entsprechend zugeordnete Piezo-Aktoren 22 anzusteuern, insbesondere mittels eines Steuersignals 21. Weiterhin weist die Schwingungskompensatorvorrichtung 10 eine Schwungmasseneinheit 50 auf, die zumindest eine, hier insbesondere genau eine, Schwungmasse 52 aufweist, die dazu vorgesehen ist, von dem zumindest einen Piezo-Aktor 22 in Bewegung versetzt zu werden. Die Schwungmasse 52 ist mechanisch starr mit dem Piezo-Aktor 22 gekoppelt. Die Schwungmasse 52 ist unmittelbar mit dem Piezo-Aktor 22 gekoppelt.

### Die Schwungmasse 52 weist eine Masse von 290 g auf.

Die Steuer- und/oder Regeleinheit 40 ist dazu vorgesehen, den zumindest einen Piezo-Aktor 22 mit Frequenzen im Bereich zwischen 200 Hz und 1500 Hz zu betreiben. Die Schwungmasse 52 weist einen Hohlraum 54 auf, in welchem der Piezo-Aktor 22 angeordnet ist. Der Hohlraum 54 ist zylindrisch ausgebildet. Die Schwungmasse 52, also insbesondere zumindest eine Außenkontur der Schwungmasse 52, ist kegelstumpfartig ausgebildet.

Der Piezo-Aktor 22 ist mittels einer Basis 60 mit dem Schwingungssystem 12 starr verbunden. Der Piezo-Aktor 22 ist als Piezostapel ausgebildet. Der Piezo-Aktor 22 weist eine zylindrische Form auf. Der Piezo-Aktor 22 weist eine Länge zwischen 4 cm und 7 cm auf. Der Piezo-Aktor 22 weist einen Durchmesser zwischen 0,5 cm und 1,5 cm auf. Ein Ende des Piezo-Aktors 22 ist an einer Innenseite eines, insbesondere spitzen und/oder schmalen, Endes der Schwungmasse 52 mit der Schwungmasse 52 verbunden. Ein dem ersten Ende gegenüberliegendes zweites Ende des Piezo-Aktor 22 ist mit der Basis 60 verbunden.

Die Basis 60 reicht teils in den Hohlraum 54 der Schwungmasse 52 hinein. Die Basis 60 weist eine Feder- und/oder Stützeinheit 62 auf, die dazu vorgesehen ist, die Schwungmasse 52 abzustützen und/oder abzufedern, insbesondere um eine Last von dem Piezo-Aktor 22 zu nehmen. Die Feder- und/oder Stützeinheit 62 ist als Federscheibe ausgebildet, die zwischen der Basis 60 und einem, insbesondere dicken, Ende der Schwungmasse 52, vorzugsweise innenseitig, angeordnet ist.

Die Schwungmasse 52 kann ein oder mehrere Befestigungselemente, insbesondere Gewinde, beispielsweise an einer dem Hohlraum 54 abgewandten Seite, aufweisen, um weitere Massenelemente anzubringen, insbesondere um eine Masse der Schwungmasse einstellen zu können.

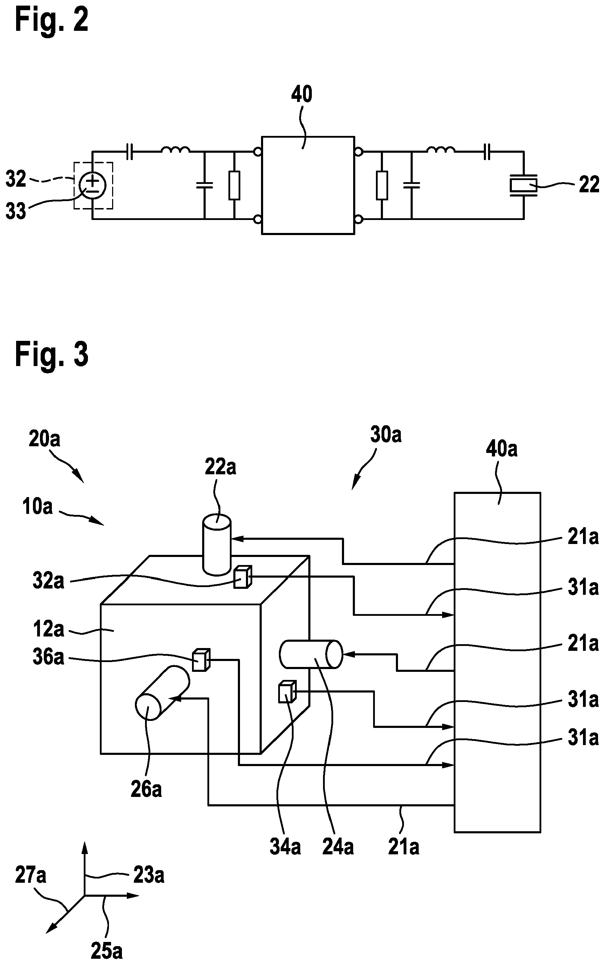

Figur 2 zeigt eine Schaltung der Schwingungskompensatorvorrichtung 10. Der Beschleunigungssensor 32 weist ein Piezoelement 33 auf. Das Piezoelement 33 ist mit einer Kapazität und einer Induktivität in einer ersten Reihenschaltung geschaltet. Die erste Reihenschaltung ist parallel zu einer weiteren Kapazität und parallel zu einem Widerstand geschaltet. Die erste Reihenschaltung ist an Eingangskontakte der Steuer- und/oder Regeleinheit 40 angeschlossen.

Der Piezo-Aktor 22 ist mit einer Kapazität und einer Induktivität in einer zweiten Reihenschaltung geschaltet. Die zweite Reihenschaltung ist parallel zu einer weiteren Kapazität und parallel zu einem Widerstand geschaltet. Die zweite Reihenschaltung ist an Ausgangskontakte der Steuer- und/oder Regeleinheit 40 angeschlossen.

In den Figuren 3 bis 7 sind fünf weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 2, verwiesen werden kann. Zur Unterscheidung der Ausführungsbeispiele sind an die Bezugszeichen der Ausführungsbeispiele der Figuren 3 bis 7 die Buchstaben a bis e angehängt.

Figur 3 zeigt eine weitere Schwingungskompensatorvorrichtung 10a. Eine Schwingungsdämpfereinheit 20a der der Schwingungskompensatorvorrichtung 10a weist einen Piezo-Aktor 22a und zumindest zwei weitere Piezo-Aktoren 24a, 26a auf. Eine Sensoreinheit 30a der Schwingungskompensatorvorrichtung 10a weist einen Beschleunigungssensor 32a und zumindest zwei weitere Beschleunigungssensoren 34a, 36a auf. Die weiteren Piezo-Aktoren 24a, 26a sind 1-zu-1 den weiteren Beschleunigungssensoren 34a, 36a zugeordnet.

Die Piezo-Aktoren 22a, 24a, 26a und Beschleunigungssensoren 32a, 34a, 36a sind jeweils paarweise unterschiedlichen Raumrichtungen 23a, 25a, 27a zugeordnet. Die drei Raumrichtungen 23a, 25a, 27a sind paarweise orthogonal zueinander.

Eine Schwungmasseneinheit (nicht näher dargestellt) der Schwingungskompensatorvorrichtung 10a weist für jeden der Piezo-Aktoren 22a, 24a, 26a eine eigene Schwungmasse auf, die starr mit dem jeweiligen Piezo-Aktor 22a, 24a, 26a verbunden ist. Die Schwungmassen können gleiche oder unterschiedliche Massen aufweisen.

Jedem der Beschleunigungssensoren 32a, 34a, 36a ist genau einer der Piezo-Aktoren 22a, 24a, 26a zugeordnet und jedem der Piezo-Aktoren 22a, 24a, 26a ist genau einer der Beschleunigungssensoren 32a, 34a, 36a zugeordnet.

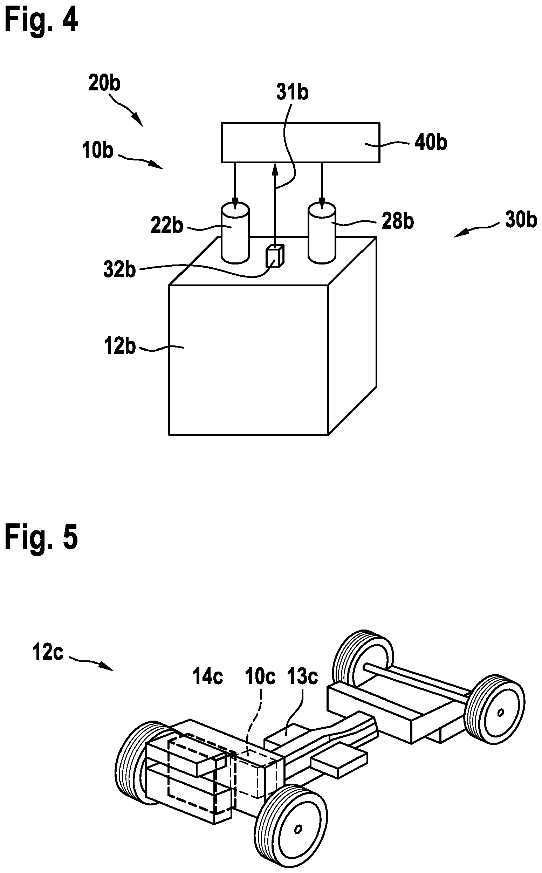

Figur 4 zeigt eine weitere Schwingungskompensatorvorrichtung 10b. Eine Schwingungsdämpfereinheit 20b der Schwingungskompensatorvorrichtung 10b weist zumindest einen zusätzlichen Piezo-Aktor 28b auf, der gemeinsam mit einem Piezo-Aktor 22b einem einzelnen Beschleunigungssensor 32 zugeordnet ist.

Der Piezo-Aktor 22b und der zusätzliche Piezo-Aktor 28b sind einer gleichen Raumrichtung zugeordnet. Eine Schwungmasseneinheit (nicht näher dargestellt) der Schwingungskompensatorvorrichtung 10b kann für den Piezo-Aktor 22b und den zusätzlichen Piezo-Aktor 28b eine gemeinsame Schwungmasse aufweisen die mit beiden Piezo-Aktoren 22b, 28b starr verbunden ist. Alternativ kann die Schwungmasseneinheit zwei Schwungmassen aufweisen, die jeweils mit einem jeweiligen der Piezo-Aktoren 22b, 28b verbunden sind. Beispielsweise weisen die Schwungmassen unterschiedliche Massen auf.

Figur 5 zeigt ein Fahrwerk eines erfindungsgemäßen Transportmittels. Das Transportmittel ist als Elektrofahrzeug, insbesondere als Elektro-Personenkraftwagen, ausgebildet. Das Transportmittel weist ein Schwingungssystem 12c auf. Das Schwingungssystem 12c weist beispielsweise ein Fahrgestell 13c auf. Das Transportmittel weist einen Elektromotor 14c auf, der mittels einer Motoraufhängung mit dem Fahrgestell 13c gekoppelt ist. Der Elektromotor 14c ist zu einem Antrieb von einem oder mehreren Rädern des Transportmittels vorgesehen. Das Transportmittel weist weiterhin eine Schwingungskompensatorvorrichtung 10c auf, die beispielsweise vergleichbar zu einer der zuvor beschriebenen Schwingungskompensatorvorrichtungen 10, 10a oder 10b ausgebildet sein kein. Die Schwingungskompensatorvorrichtung 10c ist an der Motoraufhängung oder bei der Motoraufhängung am Fahrgestell 13c angeordnet.

Die Schwingungskompensatorvorrichtung 10c ist dazu vorgesehen, zumindest eine vertikale Schwingungskomponente zu dämpfen.

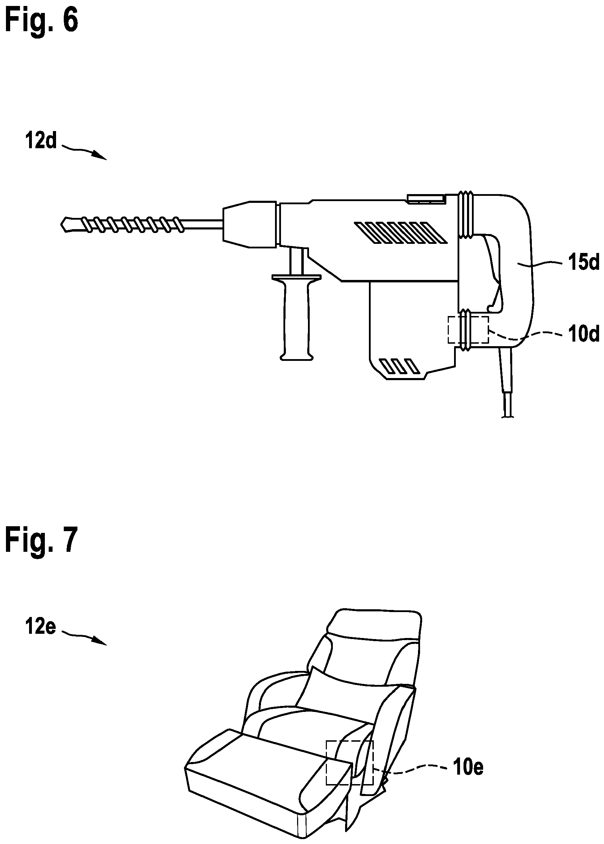

Figur 6 zeigt Handwerkzeug mit einem Schwingungssystem 12d. Das Handwerkzeug selbst bildet das Schwingungssystem 12d. Das Handwerkzeug ist beispielsweise als Bohrmaschine, insbesondere als Schlagbohrmaschine ausgebildet. Das Handwerkzeug weist einen Griff 15d auf. Das Handwerkzeug weist zumindest eine Schwingungskompensatorvorrichtung 10d auf, die insbesondere vergleichbar zu einer der zuvor beschriebenen Schwingungskompensatorvorrichtungen 10, 10a, 10b, insbesondere mit reduzierter Größe des Piezo-Aktors und/oder reduziertem Gewicht der Schwungmasse, ausgebildet sein kann. Die Schwingungskompensatorvorrichtung 10d ist beispielsweise in dem Griff 15d angeordnet.

Figur 7 zeigt einen Sitz, insbesondere Passagiersitz, eines erfindungsgemäßen Transportmittels. Das Transportmittel ist hierbei beispielsweise als Flugzeug ausgebildet. Alternativ kann der Sitz auch ein Autositz oder ein Sitz eines beliebigen anderen Transportmittels sein. Der Sitz bildet ein Schwingungssystem 12e. Der Sitz weist weiterhin eine Schwingungskompensatorvorrichtung 10e auf, die insbesondere als eine der zuvor beschriebenen Schwingungskompensatorvorrichtungen 10, 10a, 10b ausgebildet sein kann.

Das Transportmittel kann insbesondere eine Vielzahl an unabhängigen Schwingungskompensatorvorrichtungen 10e, insbesondere für jeden Sitz oder jeden Business-Klasse-Sitz eine eigene, aufweisen.

## Patentansprüche

1. Schwingungskompensatorvorrichtung zur aktiven Dämpfung von Schwingungen eines Schwingungssystems (12), insbesondere eines Schwingungssystems (12) eines Transportmittels oder eines Elektrowerkzeugs,
- mit einer Schwingungsdämpfereinheit (20), die zumindest einen Piezo-Aktor (22, 24, 26, 28) aufweist,
- mit einer Sensoreinheit (30), mit zumindest einen Beschleunigungssensor (32, 34, 36) aufweist der dem Piezo-Aktor (22, 24, 26, 28) zugeordnet ist,
- mit einer Steuer- und/oder Regeleinheit (40), die dazu vorgesehen ist, in Abhängigkeit von zumindest einem Signal (31) zumindest eines der Beschleunigungssensoren (32, 34, 36) entsprechend zugeordnete Piezo-Aktoren (22, 24, 26, 28) anzusteuern, und
- mit einer Schwungmasseneinheit (50), die zumindest eine Schwungmasse (52) aufweist, die dazu vorgesehen ist, von dem zumindest einen Piezo-Aktor (22, 24, 26, 28) in Bewegung versetzt zu werden, **dadurch gekennzeichnet, dass** die Schwungmasse (52) mechanisch starr, insbesondere unmittelbar, mit dem Piezo-Aktor (22, 24, 26, 28) gekoppelt ist.

2. Schwingungskompensatorvorrichtung nach Anspruch 1, **dadurch gekennzeichnet, dass** die Schwungmasse (52) eine Masse zwischen 100 g und 500 g aufweist.

3. Schwingungskompensatorvorrichtung nach Anspruch 1 oder 2, **dadurch gekennzeichnet, dass** die Steuer- und/oder Regeleinheit (40) dazu vorgesehen ist, den zumindest einen Piezo-Aktor (22, 24, 26, 28) mit Frequenzen im Bereich zwischen 200 Hz und 1500 Hz zu betreiben.

4. Schwingungskompensatorvorrichtung nach einem der vorhergehenden Ansprüche, **dadurch gekennzeichnet, dass** die Schwungmasse (52) einen Hohlraum (54) aufweist, in welchem der Piezo-Aktor (22, 24, 26, 28) angeordnet ist.

5. Schwingungskompensatorvorrichtung nach einem der vorhergehenden Ansprüche, **dadurch gekennzeichnet, dass** die Schwungmasse (52) kegelstumpfartig ausgebildet ist.

6. Schwingungskompensatorvorrichtung nach einem der vorhergehenden Ansprüche, **dadurch gekennzeichnet, dass** die Schwingungsdämpfereinheit (20) zumindest zwei weitere Piezo-Aktoren (22, 24, 26) aufweist, dass die Sensoreinheit (30) zumindest zwei weitere Beschleunigungssensoren (32, 34, 36) aufweist und dass die weiteren Piezo-Aktoren (22, 24, 26) 1-zu-1 den weiteren Beschleunigungssensoren (32, 34, 36) zugeordnet sind.

7. Schwingungskompensatorvorrichtung nach Anspruch 6, **dadurch gekennzeichnet, dass** die Piezo-Aktoren (22, 24, 26) und die Beschleunigungssensoren (32, 34, 36) jeweils paarweise unterschiedlichen Raumrichtungen (23, 25, 27) zugeordnet sind.

8. Schwingungskompensatorvorrichtung nach einem der vorhergehenden Ansprüche, **dadurch gekennzeichnet, dass** jedem der Beschleunigungssensoren (32, 34, 36) genau einer der Piezo-Aktoren (22, 24, 26) zugeordnet ist und dass jedem der Piezo-Aktoren (22, 24, 26) genau einer der Beschleunigungssensoren (32, 34, 36) zugeordnet ist.

9. Schwingungskompensatorvorrichtung nach einem der Ansprüche 1 bis 7, **dadurch gekennzeichnet, dass** die Schwingungsdämpfereinheit 20 zumindest einen zusätzlichen Piezo-Aktor (22, 28) aufweist, der gemeinsam mit dem Piezo-Aktor (22, 28) dem Beschleunigungssensor (32) zugeordnet ist.

10. Transportmittel, insbesondere Elektrofahrzeug, mit zumindest einer Schwingungskompensatorvorrichtung (10) nach einem der vorhergehenden Ansprüche.

11. Handwerkzeug mit zumindest einer Schwingungskompensatorvorrichtung (10) nach einem der Ansprüche 1 bis 9.
